Europäisches Patentamt

European Patent Office

Office européen des brevets

(19)

(11) **EP 0 806 686 B1**

(12) **FASCICULE DE BREVET EUROPEEN**

(45) Date de publication et mention
de la délivrance du brevet:
**02.11.2006 Bulletin 2006/44**

(51) Int Cl.:
***G02B 6/36*** (2006.01)

(21) Numéro de dépôt: **97401031.6**

(22) Date de dépôt: **07.05.1997**

(54) **Procédé et dispositif pour le positionnement et le maintien de fibres optiques**

Verfahren und Vorrichtung zum Ausrichten und Fixieren von optischen Fasern

Method and device for positioning and fixing optical fibers

(84) Etats contractants désignés:
**CH DE FR GB IT LI**

(30) Priorité: **10.05.1996 FR 9605841**

(43) Date de publication de la demande:
**12.11.1997 Bulletin 1997/46**

(73) Titulaire: **COMMISSARIAT A L'ENERGIE
ATOMIQUE**
**75015 Paris (FR)**

(72) Inventeurs:
• **Labeye, Pierre**
**38000 Grenoble (FR)**
• **Pouteau, Patrick**
**38340 Voreppe (FR)**
• **Chabrol, Claude**
**38130 Echirolles (FR)**
• **Denis, Hervé**
**38950 Saint-Martin-Le-Vinoux (FR)**

(74) Mandataire: **Moutard, Pascal Jean
Brevalex
3, Rue du Docteur Lancereaux
75008 Paris (FR)**

(56) Documents cités:
**WO-A-87/00298          US-A- 4 183 616
US-A- 5 506 928**

• **PATENT ABSTRACTS OF JAPAN vol. 004, no. 107
(P-021), 31 Juillet 1980 & JP 55 065913 A (NIPPON
TELEGR & TELEPH CORP), 17 Mai 1980,**
• **PATENT ABSTRACTS OF JAPAN vol. 009, no. 232
(P-389), 18 Septembre 1985 & JP 60 086514 A
(NIPPON DENSHIN DENWA KOSHA), 16 Mai 1985,**
• **PATENT ABSTRACTS OF JAPAN vol. 95, no. 009,
31 Octobre 1995 & JP 07 151929 A (HITACHI
CABLE LTD), 16 Juin 1995,**
• **PATENT ABSTRACTS OF JAPAN vol. 016, no. 015
(P-1298), 14 Janvier 1992 & JP 03 233412 A (NEC
CORP), 17 Octobre 1991,**

**EP 0 806 686 B1**

## Description

Domaine technique et art antérieur

La présente invention concerne le domaine du positionnement et du maintien de fibres optiques. Il s'applique en particulier dans le domaine de l'optique intégrée, où les fibres optiques sont des moyens adaptés pour réaliser le couplage et le découplage de la lumière dans des, et à partir de, composants optiques intégrés. Plus précisément, de tels problèmes de couplage et de découplage se posent lorsque les composants optiques intégrés comportent des microguides optiques. Du fait des dimensions relativement petites, à la fois des composants optiques intégrés, en particulier des microguides, et de la fibre optique, il est nécessaire d'utiliser des structures mécaniques pour réaliser un positionnement relativement précis des deux éléments l'un en face de l'autre.

Le document FR-2 659 148 décrit un procédé de connexion entre une fibre optique et un microguide optique. Dans ce document, un seul support est utilisé, à savoir le substrat sur lequel est réalisé le microguide optique, et dans lequel est réalisé un logement pour positionner et maintenir la fibre optique en face de ce microguide. La technique décrite dans cet art antérieur présente un inconvénient, car rien n'est prévu pour faciliter le dépôt de colle une fois que la fibre est mise en position. Un second inconvénient concerne la préhension de la fibre, et l'encombrement du système de préhension : la préhension de la fibre ne peut se faire que sur le demi-cylindre supérieur, défini par la partie supérieure de la fibre.

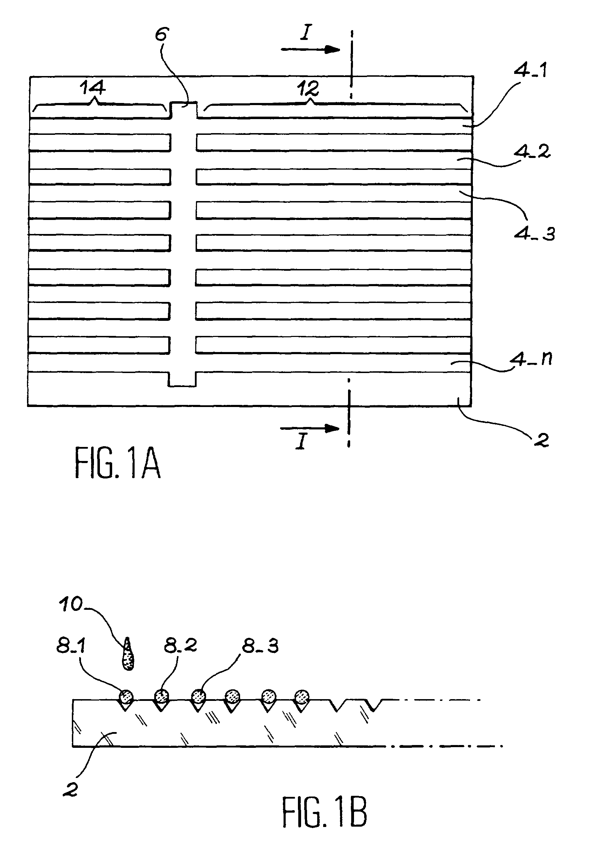

Un autre dispositif connu est illustré sur les figures 1A (vue de dessus) et 1B (vue en coupe selon I-I). Le dispositif comporte essentiellement un substrat 2 dans lequel sont gravées des rainures 4-1, ... 4-n, pour positionner n fibres optiques 8-1,... 8-n. Une fois qu'une fibre 8-1 est positionnée dans sa rainure, une goutte de colle 10 est déposée sur ladite fibre. Une tranchée transversale 6 est réalisée pour empêcher la diffusion de la colle entre deux zones 12, 14 situées de part et d'autre de la tranchée. Autrement dit, la colle est introduite dans au moins l'une des deux zones mais pas dans la tranchée. Ainsi, rien n'est prévu, dans ce dispositif, pour faciliter le dépôt de la colle après mise en position de la fibre. Par ailleurs, là encore, une telle structure ne permet la préhension de la fibre que sur une partie du demi-cylindre supérieur de celle-ci avec un système de préhension d'encombrement limité (le problème de l'encombrement du système de préhension n'a pas été pris en compte).

Un document de l'art connu, « patents abstracts of Japan » vol. 004, no. 107 (P-021), 31 juillet 1980 & JP 55 065913 A (NIPPON TELEGR & TELEPH CORP), 17 mai 1980, décrit un dispositif pour le positionnement et le maintien de N fibres optiques comportant un substrat présentant N sillons parallèles recevant chacune des fibres optiques et des tranchées de direction perpendiculaire à ces sillons, les uns ayant pour objet de permettre la découpe du substrat et les autres de permettre une émission de substance adhésive.

Exposé de l'invention

L'invention concerne un dispositif permettant un positionnement précis d'une fibre optique sur un substrat, un dépôt amélioré de la colle entre la fibre et le substrat, et un meilleur maintien de la fibre lors des opérations de positionnement et de collage.

Plus précisément, l'invention a pour objet un dispositif pour le positionnement et le maintien d'une fibre optique, comportant un substrat, un sillon destiné à recevoir une fibre optique, et au moins un premier et un second élargissements du sillon les extrémités de ces élargissements étant bornées, le long d'un axe longitudinal de ce dernier.

L'un ou l'autre des élargissements du sillon permet de déposer la colle dans le fond de la structure de maintien de la fibre, ou substrat. En effet, cet élargissement laisse un espace libre entre la fibre et le substrat, par lequel la colle peut être introduite avant et/ou après le positionnement de la fibre dans le sillon. L'autre élargissement permet de maintenir la fibre avec un outil de préhension ou de manipulation plus encombrant pouvant maintenir la fibre sur une plus grande circonférence que dans le cas des dispositifs de l'art antérieur.

On entend, dans la présente demande, par "colle" toute substance adhésive par rapport à la surface du substrat et à celle de la fibre. A titre d'exemple, on peut citer comme colle une colle époxy pour un substrat en silicium et une fibre en silice.

L'invention a également pour objet un dispositif pour le positionnement et le maintien de N fibres optiques, comportant un substrat, N sillons parallèles destinés chacun à recevoir une fibre optique et présentant chacun un axe longitudinal et au moins un premier et un second élargissements de chaque sillon, le long de son axe longitudinal, les extrémités de ces élargissements étant bornées.

Dans le cas de N fibres optiques, les effets obtenus à l'aide des premier et second élargissements de chaque sillon sont les mêmes que ceux décrits ci-dessus.

Dans ce second cas (pluralité de fibres optiques) le premier élargissement d'au moins un sillon peut être prévu communiquant avec le premier élargissement d'au moins un sillon voisin.

De même, le second élargissement d'au moins un sillon peut être prévu communiquant avec le second élargissement d'au moins un sillon voisin.

L'invention a également pour objet un procédé de fixation d'une fibre optique, sur un substrat d'un dispositif tel que décrit ci-dessus, comportant les étapes suivantes :

- positionnement de la fibre optique dans le sillon du substrat,

- maintien de l'extrémité de la fibre à l'aide d'un outil en au moins un point de la fibre situé en regard de l'un des élargissements,
- introduction de colle dans le sillon, par l'autre élargissement du sillon.

L'étape d'introduction de la colle peut être réalisée avant le positionnement de la fibre dans le sillon et/ou après le maintien de celle-ci dans l'élargissement du sillon. Par ailleurs, l'étape de positionnement de la fibre dans le sillon peut être confondue avec l'étape de maintien (l'étape de préhension permet alors d'amener la fibre dans le sillon). Dans ce cas, l'outil permet à la fois le positionnement et le maintien. Cet outil, après durcissement de la colle, est désolidarisé de la fibre. Ainsi, l'invention permet un maintien précis de la fibre pendant la phase de collage.

L'invention a également pour objet divers outils de positionnement et de maintien d'une fibre, pouvant être utilisés avec un dispositif selon l'invention.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- les figures 1A et 1B, déjà décrites, représentent un dispositif de l'art antérieur, pour le positionnement d'une pluralité de fibres optiques,
- les figures 2A et 2B représentent une vue en perspective et en coupe d'un dispositif selon l'invention, pour le maintien d'une fibre optique,
- les figures 3A et 3B sont des exemples d'outils de préhension de fibres,
- la figure 4 représente une vue en perspective d'un dispositif selon l'invention, pour le maintien de N fibres optiques,
- la figure 5 représente un dispositif dans lequel des moyens de maintien de fibres optiques, conformes à l'invention, sont prévus,
- la figure 6 représente un détail du dispositif de la figure 5, concernant le maintien des fibres optiques.

Description détaillée de modes de réalisation de l'invention

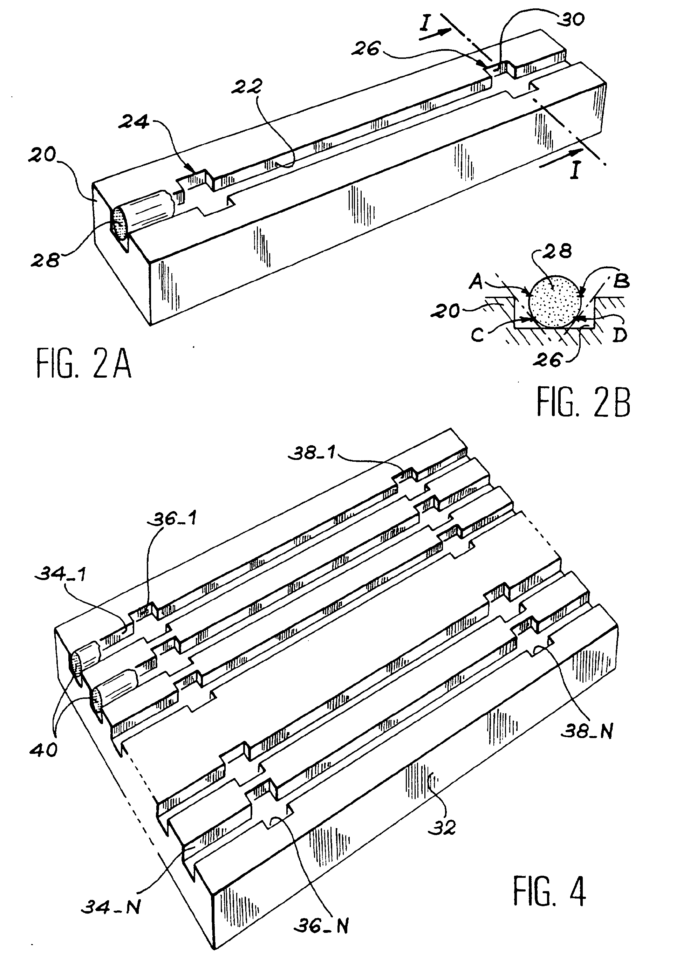

La figure 2A illustre un premier mode de réalisation de l'invention. Un sillon 22 est pratiqué dans un substrat 20. Au moins deux encoches 24, 26 définissent des élargissements du sillon 22. Dans une portion non élargie du sillon 22, ce dernier a sensiblement la même dimension qu'une fibre optique 28 destinée à y être positionnée. Au contraire, dans les zones d'élargissement telles que la zone 26 un espace est ménagé entre les bords intérieurs 30 du substrat 20 et la fibre optique 28. Par exemple, après avoir grossièrement positionné la fibre dans le sillon 22, un outil de préhension et de maintien encombrant de la fibre est positionné à hauteur d'un des élargissements, tandis que de la colle peut être introduite, dans l'autre élargissement, entre les bords intérieurs du substrat et la fibre optique. Ainsi, la colle pénètre mieux en-dessous de cette dernière. De plus, l'outil de préhension peut pénétrer dans l'élargissement du sillon, permettant de maintenir la fibre sur une surface importante pouvant être plus grande que celle définie par son demi-cylindre supérieur. La figure 2B représente une coupe du dispositif de la figure 2A selon l'axe I-I. Il apparaît bien, sur cette figure, que, grâce à l'élargissement 26, la fibre 28 peut être maintenue non seulement suivant le demi-cylindre supérieur (de trace AB sur la figure 2B), mais aussi suivant les surfaces latérales, de trace AC et BD sur la figure 2B. Un meilleur maintien est donc assuré lors des opérations de collage.

Ainsi, si l'invention permet un maintien sur une plus grande surface de la fibre, elle n'est cependant pas limitée à un tel maintien. En effet, un maintien sur une partie de la surface de trace AB peut suffire.

Dans le cadre de ce premier exemple, deux élargissements seulement ont été représentés le long de l'encoche 22. En fait, un nombre d'élargissements supérieur peut être prévu, en particulier pour multiplier les points d'introduction de la colle et/ou de maintien pour un outil de préhension encombrant.

De plus, les élargissements peuvent présenter des extrémités bornées, ou fermées (comme sur les figures 2A et 2B) ou bien non bornées. En fonction de la viscosité de la substance adhésive ou de la colle utilisée, il peut être préférable d'utiliser des élargissements bornés.

C'est le cas notamment pour une substance plutôt fluide.

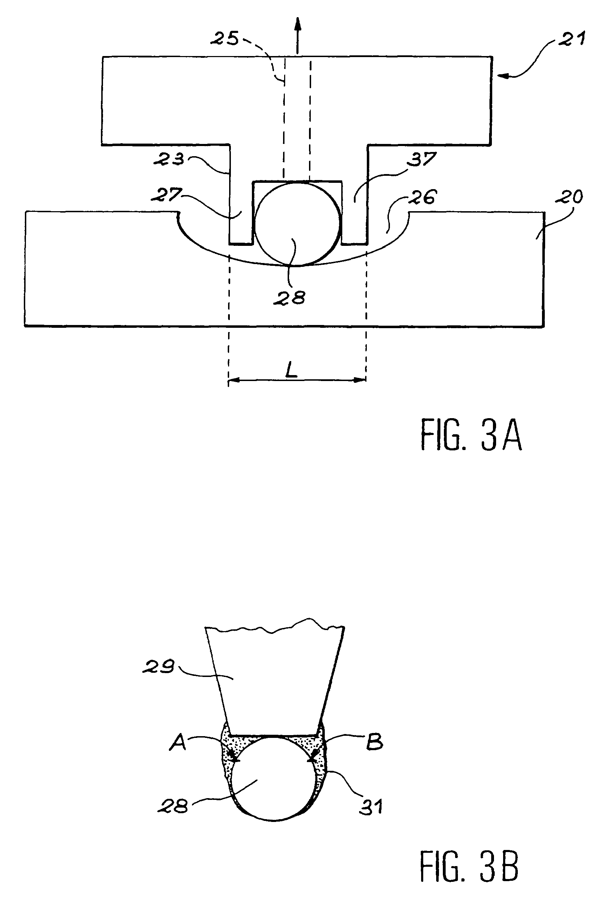

Deux exemples d'outil de positionnement et de maintien pouvant être utilisé sont illustrés sur les figures 3A et 3B.

Dans le cas de la figure 3A, la fibre 28 est maintenue à l'aide d'un outil de préhension 21 qui présente une tête 23 dont la largeur L est supérieure au diamètre de la fibre. Un conduit d'aspiration 25, relié à des moyens d'aspiration non représentés sur la figure, permet de maintenir la fibre 28 dans la tête 23. La fibre est calée entre deux joues, ou montants, 27, 37. Cet outil permet un maintien sur le demi-cylindre supérieur. Des variantes de cet outil peuvent être réalisées pour avoir un maintien important sur une surface inférieure au demi-cylindre.

L'outil de la figure 3B comporte en fait une pointe chauffante 29 et une couche de cire 31. Cet outil permet un maintien sur une surface plus importante que le demi-cylindre supérieur (de trace AB). Le dégagement de l'outil est effectué ensuite par chauffage à une température supérieure à la fusion de la cire 31.

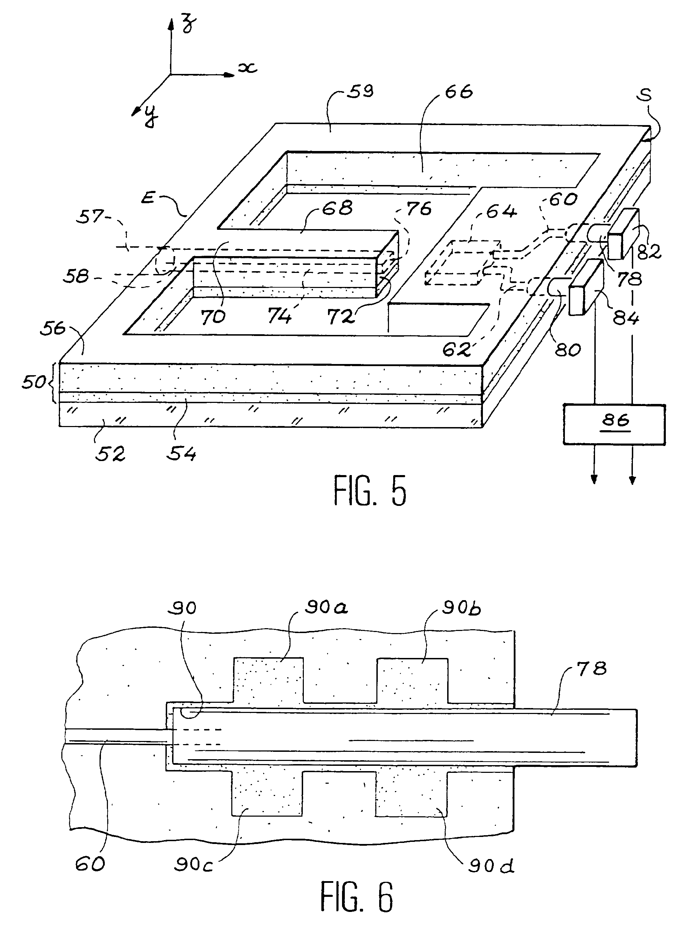

Un autre mode de réalisation de l'invention va être décrit en liaison avec la figure 4. Sur cette figure, N sillons 34-1, ..., 34-N sont prévus dans un substrat 32. Le long de chaque sillon, au moins deux élargissements 36-1,..., 36-N et 38-1,..., 38-N sont prévus. Pour chaque sillon, la fonction de chacun de ces deux élargissements est la même que celle décrite ci-dessus dans le cadre du premier mode de réalisation.

Les élargissement peuvent présenter des extrémités bornées, ou fermées (comme sur la figure 4) ou bien non bornées. En fonction de la viscosité de la substance adhésive ou de la colle utilisée, il peut être préférable d'utiliser des élargissements bornés.

Lorsque les élargissements communiquent entre eux, ils forment une tranchée qui peut être bornée ou fermée à ses extrémités, ou pas. L'utilisation d'une tranchée bornée fermée peut, là encore, se révéler avantageuse suivant la viscosité ou la fluidité de la substance adhésive utilisée.

Par ailleurs, pour chaque sillon, des élargissements en nombre supérieur à 2 peuvent être prévus, afin de multiplier les points de collage et/ou de maintien de la fibre.

Là encore, ces élargissements 38-1, 38-N permettent un maintien de la fibre 40 sur une surface pouvant être supérieure à celle limitée par son demi-cylindre supérieur par un outil de préhension pouvant pénétrer dans les élargissements. Un tel outil peut être du type décrit ci-dessus en liaison avec les figures 3A et 3B. De même, les élargissements 36-1, 36-N permettent de faciliter l'introduction d'une colle entre les fibres 40 et le substrat 32. Le positionnement et le maintien des fibres peuvent être réalisés individuellement ou collectivement avec des outils de préhension et de distribution de colle appropriés.

Dans tous les cas, la forme des gravures réalisées (que ce soit pour le sillon ou pour les élargissements de celui-ci) dépend du matériau dans lequel est réalisé la structure, ainsi que de la méthode employée pour réaliser une gravure. Dans le cas d'un substrat en silicium, on peut utiliser les techniques de gravures sèche ou humide, isotrope ou anisotrope. On peut également utiliser des polymères de moulage pour réaliser un dispositif avec sillon et élargissement.

La figure 5 représente un dispositif pouvant mettre en oeuvre des structures de positionnement de fibres optiques selon l'invention. Le dispositif représenté est un dispositif optomécanique. Il comprend une couche plane, ou structure guide 50 (qui peut être composée d'une ou plusieurs couches), qui est réalisée sur un substrat 52, par exemple en silicium monocristallin, et qui présente une face d'entrée E et une face de sortie S parallèles, obtenues par exemple par clivage. La structure guide 50 comporte par exemple une couche tampon 54 en oxyde de silicium (8 à 12 $\mu$m d'épaisseur), et une couche supérieure 56 en silice (2 à 10 $\mu$m d'épaisseur), cette dernière pouvant, pour certaines applications être remplacée par de l'air.

La structure guide comprend également un microguide d'entrée 58 et deux microguides de sortie 60 et 62, en oxyde de silicium dopé par exemple par du phosphore, de 2 à 6 $\mu$m de hauteur et de 2 à 8 $\mu$m de large ainsi qu'un coupleur multimode 64 ayant sensiblement la même hauteur (de 2 $\mu$m à 6 $\mu$m), pour une largeur typiquement comprise entre 10 $\mu$m et 50 $\mu$m. Les microguides 58, 60, 62 sont parallèles à une direction x, elle-même parallèle à la plus grande surface 59 de la couche plane ou structure guide 50, et ils sont disposés de part et d'autre d'un évidement 66 traversant la structure guide 50.

L'évidement 66 définit, dans la structure guidante 50 et le substrat une partie fixe, une poutre flexible 68 orientée au repos parallèlement à la direction x, cette poutre pouvant se déplacer dans l'évidement 66 selon une direction y, parallèle à la surface 59 de la structure guide et perpendiculaire à la direction x. Cette poutre 68 comprend une extrémité fixe 70, solidaire de la partie fixe, et une extrémité libre 72 apte à se déplacer dans l'évidement 66. Dans le prolongement du microguide 58 d'entrée, un microguide central 74 s'étend sur toute la longueur de la poutre 68, son extrémité 76 débouchant à l'extrémité 72 de celle-ci.

Le coupleur multimode 64 est disposé en regard de l'extrémité 76 du microguide 74. On entend par coupleur multimode un coupleur ou un guide multimode présentant plusieurs modes de propagation ou plusieurs guides monomodes.

La longueur L du coupleur multimode 64 est, de préférence, telle que, lorsqu'un faisceau incident I dirigé sur la section d'entrée du coupleur présente une répartition d'intensité comportant un seul maximum, on obtienne un faisceau de sortie présentant un nombre N de maximum, avec N$\geq$2.

Les conditions pour obtenir un tel résultat sont données, par exemple, par la méthode analytique décrite pour des coupleurs multimodes dans un article de R. Ulrich et al., intitulé "Self imaging in homogeneous planar optical waveguides", publié dans Applied Physics Letters, vol.27, n°6, 15 septembre 1975, pages 337-339.

Lorsque le système est au repos, c'est-à-dire lorsque le faisceau en entrée du coupleur 74 est centré sur l'axe de symétrie de ce dernier, on obtient en sortie N maxima répartis symétriquement par rapport à l'axe de symétrie du coupleur.

Lorsque le faisceau d'entrée est décentré, la répartition d'intensité à la sortie du coupleur se trouve déséquilibrée.

Le fonctionnement de ce dispositif est le suivant.

Un signal optique est produit par une source de rayonnement (par exemple à la longueur d'onde 0,78 $\mu$m) non représentée sur la figure 5, puis est transmis par une fibre optique 57 d'entrée et par le microguide 58 puis 74 en direction du coupleur multimode 64. A la sortie de ce dernier, N guides de sortie 60, 62 (N=2 sur la figure 5) transmettant le rayonnement issu du coupleur 64 vers N fibres optiques 78, 80, elles-mêmes reliées à N photodétecteurs 82, 84. Chaque microguide de sortie est positionné à l'endroit de formation d'un maximum, en sortie du coupleur, lorsque le faisceau d'entrée est en position centrée sur l'entrée du coupleur. Chaque détecteur délivre un signal représentatif du signal optique transmis par la fibre optique en sortie de laquelle il est disposé. Enfin, ces détecteurs sont reliés à des moyens 86 de traitement des signaux qu'ils délivrent.

Lorsqu'une vibration ou accélération se produit, l'extrémité libre de la poutre 68 se déplace suivant la direction y, ce qui modifie la répartition du rayonnement en sortie du coupleur multimode, donc du rayonnement transmis par les N guides de sortie 60, 62, et donc le signal produit par les détecteurs 82, 84. Le déplacement dy est lié à l'accélération y de la vibration par la relation :

$$d_y = \frac{\gamma}{(2\pi f_o)^2} \qquad (1)$$

où $f_o$ est la fréquence de résonance naturelle de la poutre 68.

Un exemple de procédé de réalisation d'un tel dispositif comprend les étapes suivantes :

- une étape de formation de la couche 54, par exemple par oxydation thermique du substrat 52,
- le dépôt d'une couche de silice par LPCVD ou par PECVD, que l'on dope par exemple avec du phosphore,
- une étape de réalisation par exemple (par photolithographie) d'un masque de résine positif masquant les zones destinées à constituer les microguides 74, 60, 62, et le coupleur multimode 64 (ou les guides monomodes couplés),
- une étape de gravure anisotrope (du type ionique réactive) réalisée à travers ce masque, pour obtenir les microguides et le coupleur multimode ; le masque est ensuite éliminé avec un plasma d'oxygène,
- une étape de dépôt de la couche 56 par technique de dépôt chimique en phase vapeur basse pression (LPCVD), ou assisté plasma (PECVD),
- une étape de réalisation d'un autre masque (comme ci-dessus), afin de dégager la poutre 68,
- une étape de gravure anisotrope, du type gravure ionique réactive avec par exemple du $CHF_3$, cette étape permet de graver les couches 54 et 56, à la fois pour définir la poutre et les zones de connexion,
- une étape de gravure isotrope (gravure ionique réactive avec par exemple du $SF_6$) du substrat en silicium 52, en utilisant le même masque, afin de dégager la poutre du substrat, mais aussi de terminer la réalisation des zones de connexion des fibres optiques 78, 80.

Les zones de connexion ainsi définis correspondent au sillon apte à recevoir les fibres optiques. Par ailleurs, comme illustré sur la figure 6 (qui ne représente qu'un seul des guides de sortie et la fibre optique correspondante) la zone de connexion 90 prévue pour la fibre 78 peut en outre être élargie à certains endroits 90a, 90b, 90c, 90d conformément à la présente invention, pour faciliter l'apport de colle optique et permettre le maintien des fibres. Les élargissements 90a-90d sont réalisés en même temps que la zone 90 de connexion. Ceci peut s'appliquer à la zone de connexion de chacune des fibres 57, 78, 80.

## Revendications

1. Dispositif pour le positionnement et le maintien d'une fibre optique, comportant une fibre optique (28), un substrat (20), un sillon (22) recevant la fibre optique (28), et au moins un premier et un second élargissements (24, 26) du sillon, les extrémités de ces élargissements étant bornées, le long d'un axe longitudinal de ce dernier, une substance adhésive étant introduite dans un des deux élargissements, cette substance adhésive fixant la fibre sur le substrat.

2. Dispositif pour le positionnement et le maintien de N fibres optiques, comportant N fibres optiques (40), un substrat (32), N sillons parallèles (34-1,..., 34-N) recevant chacun une des fibres optiques (40) et présentant chacun un axe longitudinal et au moins un premier et un second élargissements (36-1,..., 36-N ; 38-1,... 38-N) de chaque sillon, le long de son axe longitudinal, les extrémités de ces élargissements étant bornés, une substance adhésive étant introduite dans un des deux élargissements de chaque sillon, cette substance adhésive fixant la fibre correspondante sur le substrat.

3. Dispositif selon la revendication 2, le premier élargissement d'au moins un sillon communiquant avec le premier élargissement d'au moins un sillon voisin.

4. Dispositif selon la revendication 3, les premiers élargissements définissant entre eux une tranchée qui est bornée à ses extrémités.

5. Dispositif selon l'une des revendications 2, 3 ou 4, le second élargissement d'au moins un sillon communiquant avec le second élargissement d'au moins un sillon voisin.

6. Dispositif selon la revendication 5, les seconds élargissements définissant entre eux une tranchée qui est bornée à ses extrémités.

7. Procédé de fixation d'une fibre optique sur un substrat (20) d'un dispositif, celui-ci comportant, outre le substrat (20), un sillon (22) destiné à recevoir ladite fibre optique (28), et au moins un premier et un second élargissements (24, 26) du sillon, le long d'un axe longitudinal de ce dernier, les extrémités de ces élargissements étant bornés, le procédé comportant les étapes suivantes :

- positionnement de la fibre optique dans le sillon (22) du substrat,
- maintien de la fibre à l'aide d'un outil en au moins un point de la fibre situé en regard de l'un des élargissements,
- introduction d'une substance adhésive dans le sillon, par l'autre élargissement du sillon, cette substance permettant de fixer la fibre sur le substrat.

**8.** Procédé de fixation de fibres optiques sur un substrat (32) d'un dispositif comportant, outre le substrat (32), N sillons parallèles (34-1, ..., 34-N) destinés chacun à recevoir une fibre optique (40), et présentant chacun un axe longitudinal et au moins un premier et un second élargissements (36-1, , 36-N ; 38-1, , 38-N) de chaque sillon, le long de son axe longitudinal, les extrémités de ces élargissements étant bornés,le procédé de fixation comportant, pour chaque fibre optique, les étapes suivantes :

- positionnement de la fibre optique dans un des sillons du substrat,
- maintien de la fibre à l'aide d'un outil en au moins un point de la fibre situé en regard de l'un des élargissements du sillon dans lequel elle est positionnée,
- introduction d'une substance adhésive dans ce sillon, par l'autre élargissement du sillon, cette substance permettant de fixer la fibre sur le substrat.

**9.** Procédé selon l'une des revendications 7 ou 8, l'élargissement le plus proche de l'extrémité de chaque fibre étant utilisé pour l'introduction de la substance adhésive, l'autre étant utilisé pour le maintien de la fibre.

**10.** Procédé selon l'une des revendications 7 à 9, l'étape d'introduction de la substance adhésive étant réalisée avant le positionnement de chaque fibre dans le sillon.

**11.** Procédé selon l'une des revendications 7 à 9, l'étape d'introduction de la substance adhésive étant réalisée lors du maintien de chaque fibre à l'aide d'un outil.

**12.** Procédé selon l'une des revendications 7 à 9, l'étape de positionnement de chaque fibre étant confondue avec l'étape de maintien.

**13.** Procédé selon l'une des revendications 7 à 12, l'outil permettant le maintien de chaque fibre étant un outil de préhension (21) de la fibre optique (28) comportant une tête de préhension (23) de la fibre, de largeur supérieure au diamètre de la fibre.

**14.** Procédé selon la revendication 13, la tête de préhension comportant deux montants (27, 37) permettant de caler la fibre optique (28), et un conduit (25) d'aspiration débouchant entre les deux montants.

**15.** Procédé selon l'une des revendications 7 à 12, l'outil permettant le maintien de chaque fibre étant un outil de préhension comportant une pointe chauffante (29) apte à chauffer une cire (31) destinée à entourer au moins partiellement la fibre optique.

## Claims

**1.** Device for the positioning and holding of an optical fibre, comprising an optical fibre (28), a substrate (20), a groove (22) receiving the optical fibre (28) and at least one first and one second widenings (24, 26) of the groove, along the longitudinal axis of the latter, an adhesive substance being introduced into one of the two widenings, said adhesive substance fixing the fibre to the substrate.

**2.** Device for the positioning and holding of N optical fibres, comprising N optical fibres (40), a substrate (32), N parallel grooves (34-1, ..., 34-N) each receiving one of the optical fibres (40) and each having a longitudinal axis and at least one first and one second widenings (36-1, ..., 36-N; 38-1, ..., 38-N) of each groove, along the longitudinal axis thereof, an adhesive substance being introduced into one of the two widenings of each groove, said adhesive substance fixing the corresponding fibre to the substrate.

**3.** Device according to claim 2, the first widening of at least one groove communicating with the first widening of at least one neighbouring groove.

**4.** Device according to claim 3, the first widenings defining between them a trench bounded at its ends.

**5.** Device according to one of the claims 2, 3 or 4, the second widening of at least one groove communicating with the second widening of at least one neighbouring groove.

**6.** Device according to claim 5, the second widenings defining between them a trench, which is bounded at its ends.

**7.** Process for fixing an optical fibre to a substrate (20) of a device, the latter having, apart from the substrate (20), a groove (22) for receiving said optical fibre (28) and at least one first and one second widening (24, 26) of the groove, along a longitudinal axis of the latter, the ends of the widenings being bounded, the process comprising the positioning of the optical fibre in the substrate groove (22), the holding of the fibre with the aid of a tool at at least one point of the fibre facing one of the widenings and the introduction of an adhesive substance into the groove, by the other widening of said groove, said substance making it possible to fix the fibre to the substrate.

8. Process for fixing optical fibres to a substrate (32) of a device comprising, apart from the substrate (32), N parallel grooves (34-1, ..., 34-N), each intended to receive an optical fibre (40), and each having a longitudinal axis and at least one first and one second widening (36-1, 36-N; 38-1, 38-N) of each groove, along the longitudinal axis thereof, the ends of the widenings being bounded, the fixing process comprising, for each optical fibre the stages of positioning the optical fibre in one of the grooves of the substrate, the holding of the fibre with the aid of a tool at at least one point of the fibre facing one of the widenings of the groove in which it is positioned and introducing an adhesive substance into said groove, via the other widening of the groove, said substance making it possible to fix the fibre to the substrate.

9. Process according to one of the claims 7 or 8, the widening closest to the end of each fibre being used for introducing the adhesive substance, the other being used for holding the fibre.

10. Process according to one of the claims 7 to 9, the stage of introducing the adhesive substance taking place prior to the positioning of each fibre in the groove.

11. Process according to one of the claims 7 to 9, the stage of introducing the adhesive substance taking place whilst holding each fibre with the aid of a tool.

12. Process according to one of the claims 7 to 9, the stage of positioning each fibre coinciding with the holding stage.

13. Process according to one of the claims 7 to 12, the tool holding each fibre being an optical fibre (28) gripping tool (21) having a fibre gripping head (23) with a width exceeding the fibre diameter.

14. Process according to claim 13, the gripping head having two posts (27, 37) making it possible to fix the optical fibre (28), as well as a suction pipe (25) issuing between the two posts.

15. Process according to one of the claims 7 to 12, the tool for holding each fibre being a gripping tool having a heating point (29) able to heat a wax (31) for surrounding at least partly the optical fibre.

**Patentansprüche**

1. Vorrichtung zum Ausrichten und Fixieren einer optischen Faser, eine optische Faser (28), ein Substrat (20), eine Rille (22) zur Aufnahme der optischen Faser (28) und wenigstens eine erste und eine zweite Verbreiterung (24, 26) der Rille längs einer Längsachse dieser letzteren umfassend, wobei die Enden dieser Verbreiterungen abgegrenzt sind, eine Haftsubstanz in eine der beiden Verbreiterungen eingebracht wird, diese Haftsubstanz die Faser auf dem Substrat fixiert.

2. Vorrichtung zum Ausrichten und Fixieren von N optischen Fasern, N optische Fasern (40), ein Substrat (32) und N parallele Rillen (34-1, ..., 34-N) umfassend, von denen jede eine optische Faser (40) aufnimmt und jede eine Längsachse und wenigstens eine erste und eine zweite Verbreiterung (36-1, ..., 36-N; 38-1, ..., 38-N) jeder Rille längs ihrer Längsachse aufweist, wobei die Enden dieser Verbreiterungen abgegrenzt sind, eine Haftsubstanz in eine der beiden Verbreiterungen eingebracht wird, diese Haftsubstanz die entsprechende Faser in dem Substrat fixiert.

3. Vorrichtung nach Anspruch 2, wobei die erste Verbreiterung von mindestens einer Rille mit der ersten Verbreiterung von wenigstens einer Nachbarrille kommuniziert.

4. Vorrichtung nach Anspruch 3, wobei die ersten Verbreiterungen miteinander einen Graben bilden, der an seinen Enden abgegrenzt ist.

5. Vorrichtung nach einem der Ansprüche 2, 3 oder 4, wobei die zweite Verbreiterung von mindestens einer Rille mit der zweiten Verbreiterung von wenigstens einer Nachbarrille kommuniziert.

6. Vorrichtung nach Anspruch 5, wobei die zweiten Verbreiterungen miteinander einen Graben bilden, der an seinen Enden abgegrenzt ist.

7. Verfahren zum Fixieren einer optischen Faser auf einem Substrat (20) einer Vorrichtung, die außer dem Substrat (20) eine Rille (22) zur Aufnahme der optischen Faser (28) und mindestens eine erste und eine zweite Verbreiterung (24, 26) der Rille längs einer Längsachse dieser letzteren umfasst, wobei die Enden dieser Verbreiterungen abgegrenzt sind und das Verfahren die folgenden Schritte umfasst:

   - Positionieren der optischen Faser in der Rille (22) des Substrats,

- Festhalten der Faser mit Hilfe eines Werkzeugs in wenigstens einem Punkt der Faser, der sich gegenüber bzw. auf Höhe einer der Verbreiterungen befindet,

- Einbringen einer Haftsubstanz in die andere Verbreiterung dieser selben Rille, wobei diese Haftsubstanz dazu dient, die Faser auf dem Substrat zu fixieren.

**8.** Verfahren zum Fixieren von optischen Fasern auf einem Substrat (32) einer Vorrichtung, die außer dem Substrat (32) N parallele Rillen (34-1, ..., 34-N) zur Aufnahme von jeweils einer optischen Faser (40) und mindestens eine erste und eine zweite Verbreiterung (36-1, , 36-N; 38-1, , 38-N) jeder Rille längs ihrer Längsachse umfasst, wobei die Enden dieser Verbreiterungen abgegrenzt sind und das Fixierverfahren für jede optische Faser die folgenden Schritte umfasst:

- Positionieren der optischen Faser in einer der Rillen des Substrats,

- Festhalten der Faser mit Hilfe eines Werkzeugs in wenigstens einem Punkt der Faser, der sich gegenüber bzw. auf Höhe einer der Verbreiterungen der Rille befindet, in der sie positioniert ist

- Einbringen einer Haftsubstanz in die andere Verbreiterung dieser selben Rille, wobei diese Haftsubstanz dazu dient, die Faser auf dem Substrat zu fixieren.

**9.** Verfahren nach einem der Ansprüche 7 oder 8, wobei die am nächsten bei dem Ende jeder Faser befindliche Verbreiterung zum Einbringen der Haftsubstanz benutzt wird, und die andere zum Festhalten der Faser benutzt wird.

**10.** Verfahren nach einem der Ansprüche 7 bis 9, wobei der Schritt zum Einbringen der Haftsubstanz vor dem Positionieren jeder Faser in ihrer Rille erfolgt.

**11.** Verfahren nach einem der Ansprüche 7 bis 9, wobei der Schritt zum Einbringen der Haftsubstanz während des Festhaltens jeder Faser mit Hilfe eines Werkzeugs erfolgt.

**12.** Verfahren nach einem der Ansprüche 7 bis 9, wobei der Schritt zur Positionierung jeder Faser mit dem Festhalteschritt zusammenfällt.

**13.** Verfahren nach einem der Ansprüche 7 bis 12, wobei das Werkzeug zum Festhalten jeder Faser ein Werkzeug (21) zum Umgreifen der optischen Faser (28) ist, das einen Faserumgreifungskopf (23) mit einer Breite umfasst, die größer ist als der Durchmesser der Faser.

**14.** Verfahren nach Anspruch 13, wobei der Faserumgreifungskopf zwei Schenkel (27, 37) zur Blockierung der optischen Faser (28) und eine Ansaugleitung (25) zwischen den beiden Schenkeln umfasst.

**15.** Verfahren nach einem der Ansprüche 7 bis 12, wobei das Werkzeug zum Festhalten jeder Faser ein Greifwerkzeug mit einer Heizspitze (29) ist, fähig ein Wachs (31) zu erhitzen, das dazu bestimmt ist, die optische Faser wenigstens partiell zu umgegeben.

FIG. 1A

FIG. 1B

FIG. 2A

FIG. 2B

FIG. 4

FIG. 3A

FIG. 3B

FIG. 5

FIG. 6